# EUROPÄISCHE PATENTANMELDUNG

(11) **EP 2 374 556 A1**
(43) Veröffentlichungstag der Anmeldung: **12.10.2011**
(21) Anmeldenummer: 11000851.3
(22) Anmeldetag: 03.02.2011
(51) Int. Cl.: B21F 11/00, B23B 27/16, B23B 29/04

(54) **Drahtbearbeitungsmaschine und Schneidwerkzeug für eine Drahtbearbeitungsmaschine**

(30) Priorität: 08.04.2010 DE 102010014246
(71) Anmelder: WAFIOS Aktiengesellschaft, 72764 Reutlingen (DE)
(72) Erfinder: Schürmann, Alf, 72766 Reutlingen (DE); Christou, Konstantinos, 72770 Reutlingen (DE); Reicherter, Klaus, 72764 Reutlingen (DE)
(74) Vertreter: Geyer, Fehners & Partner

(57) **Zusammenfassung**

Bei einer Drahtbearbeitungsmaschine mit Schneideinrichtungen zum Schneiden des Drahtes ist jeder Schneideinrichtung ein Schneidwerkzeug (1) zugeordnet, das einen Werkzeughalter (2) mit einem Werkzeugeinsatz (3) umfaßt, der in einer Formaufnahme (4) am Werkzeughalter (2) sitzt, die drei zueinander geneigte Abstützflächen (5,6,7) aufweist. Im Werkzeughalter (2) ist in einem Abstand (a) von der Formaufnahme (4) entfernt eine Gewindebohrung (8) vorgesehen. In die eine Abstützfläche (7) mündet eine Aussparung (16) im Werkzeughalter (2), die ihn durchsetzt, deren vorderer Endbereich in einem Abstand (c) von der einen Abstützfläche (7) einen Absatz (18) bildet und die im Werkzeughalter (2) bis zu der Gewindebohrung (8) verläuft. Der Werkzeugeinsatz (3) umfaßt eine Durchgangsbohrung (15), in die ein Schenkel (14) eines L-förmigen Winkelhebels (13) mit Spiel hineinragt, während der andere Schenkel (12) des Winkelhebels (13) in der Aussparung (18) sitzt, mit seinem freien Endbereich in eine Axialnut (11) einer in die Gewindebohrung (8) eingeschraubten Schraube (9) hineinragt und sich an seinem vorderen Ende auf dem Absatz (8) abstützt. Der Winkelhebel (13) ist durch Verdrehen der Schraube (9) verkippbar und damit der Werkzeughalter (2) gegen alle Abstützflächen (5,6,7) verklemmbar. Die Erfindung betrifft auch ein entsprechendes Schneidwerkzeug.

## Beschreibung

Die Erfindung bezieht sich auf eine Drahtbearbeitungsmaschine mit einem Drahteinzug, einer Drahtführung sowie einer dieser in Drahtförderrichtung nachgeschalteten Drahtformstation, an der Drahtformwerkzeuge zur Bearbeitung des zugelieferten Drahtes und Schneideinrichtungen zum Schneiden desselben vorgesehen sind, wobei jeder Schneideinrichtung ein Schneidwerkzeug zugeordnet ist, das einen Werkzeughalter mit einem an diesem befestigten Werkzeugeinsatz umfaßt, der in einer am Werkzeughalter an dessen in Schneidrichtung vorderem Ende ausgebildeten Formaufnahme aufgenommen und befestigt ist.

Bei Drahtbearbeitungsmaschinen ist es bisher bekannt, Schneideinrichtungen mit Schneidwerkzeugen einzusetzen, die an einem Halter direkt verschraubt werden (US 7 055 356 B2).

Bekannt ist auch die Verwendung einer Schneidvorrichtung an einer Federherstellmaschine, bei welcher das Schneidewerkzeug fest in einer Nut montiert ist, die an der Vorderseite des Bodenabschnitts eines Schlittens ausgebildet ist, mittels dessen der Schneidhub ausführbar ist. Dabei wird die in der Nut sitzende Schneide an der Außenseite der Nut von einer Abdeckplatte abgedeckt und mittels in dieser sitzenden Schrauben in der Nut fest fixiert.

Im Markt sind ferner Drahtbearbeitungsmaschinen mit Schneideinrichtungen bekannt, bei denen das Schneidwerkzeug mittels einer Spannpratze an einem Halter befestigt ist.

Schließlich wird in der EP 0 798 056 B1 auch eine Schneideinrichtung mit einem Schneidwerkzeug beschrieben, bei dem ein hydraulisch arbeitender Schneidzylinder eingesetzt wird, in dessen Kolbenstange in einer Aufnahmebohrung eine Schneidwerkzeugaufnahme eingesetzt und an der Kolbenstange befestigt ist, in der das Schneidwerkzeug seinerseits eingespannt gehalten wird. Über die Einspannung selbst ist in der Druckschrift nichts näheres ausgeführt, Fig. 2 der Druckschrift zeigt jedoch in einer Schnittdarstellung, daß die Einspannung ganz offensichtlich durch Eintreiben eines Spannklotzes in die Aufnahme bewirkt wird.

Bei den bekannten Drahtbearbeitungsmaschinen ist jedoch der Austausch des Schneideinsatzes relativ aufwendig. So muß teilweise der gesamte Halter entnommen werden, damit z. B. eine Pratze gelöst und der Schneideinsatz gewechselt werden kann. Im übrigen baut der bisher oftmals eingesetzte Halter samt Pratze und Schneidwerkzeug nur wenig platzsparend. Als weiterer Nachteil der bisher bekannten Lösungen hat sich gezeigt, daß die Schneideinrichtungen nur einmal verwendet werden konnten und bei Verschleiß weggeworfen wurden.

Die Erfindung stellt daher darauf ab, eine Drahtbearbeitungsmaschine der eingangs genannten Art vorzuschlagen, bei welcher ein besonders schneller Werkzeugwechsel ohne eine Demontage des Halters vorgenommen werden kann, wobei überdies hierfür die bauliche Anordnung einfach, ohne großen Aufwand herstellbar und auch von ungeübten Personen unschwer bedienbar ist.

Erfindungsgemäß wird dies bei einer Drahtbearbeitungsmaschine der eingangs genannten Art dadurch erreicht, daß die Formaufnahme zwei zueinander geneigte Abstützflächen aufweist und eine weitere Abstützfläche vorgesehen ist, die zu den beiden anderen unter einem Winkel angestellt ist, wobei im Werkzeughalter in einem Abstand von der Formaufnahme entfernt eine Gewindebohrung angebracht ist, daß ferner eine in die weitere Abstützfläche mündende Aussparung im Werkzeughalter angebracht ist, die ihn durchsetzt, dabei in ihrem vorderen Endbereich in einem Abstand von der weiteren Stützfläche einen Absatz bildet und in Längsrichtung des Werkzeughalters bis zu der Gewindebohrung verläuft, und daß im Werkzeugeinsatz eine Durchgangsbohrung vorgesehen ist, in die der eine, zylindrische Schenkel eines L-förmigen Winkelhebels mit Spiel hineinragt, während der andere Schenkel des Winkelhebels in der Aussparung sitzt, mit seinem freien Endbereich in eine Axialnut einer in die Gewindebohrung eingeschraubten Schraube radial hineinragt und sich an seinem entgegengesetzten, vorderen Ende auf dem Absatz abstützt, wobei der zylindrische Schenkel des Winkelhebels in der Durchgangsbohrung durch Verdrehen der Schraube unter Abstützung gegen den Absatz verkippbar und damit der Werkzeugeinsatz gegen alle Abstützflächen verklemmbar sowie am Werkzeug fixierbar ist.

Bei der erfindungsgemäßen Anordnung wird durch die Verwendung eines Winkelhebels, der mit einem zylindrischen Schenkel in eine Durchgangsbohrung des Werkzeugeinsatzes und mit seinem anderen Schenkel in eine Axialnut einer am Werkzeughalter befestigen Schraube radial hineinragt, wobei durch eine Verdrehung der Schraube die Winkelausrichtung des Winkelhebels verstellbar ist, die Möglichkeit geschaffen, den Winkelhebel unter Aufhebung des Spieles seines zylindrischen Schenkels in der Durchgangsbohrung des Werkzeugeinsatzes durch Verdrehen der Schraube in eine ihn gegen die Abstützflächen der Formaufnahme verklemmende und damit in dieser fixierte Position zu überführen. Dies kann mittels einer relativ geringen Verdrehung dieser Verstellschraube für den Winkelhebel erreicht werden, wobei eine gegenläufige Verdrehung der Schraube wiederum sehr rasch eine Freigabe der Verklemmung des Werkzeugeinsatzes gegen die Abstützflächen herbeiführt, wonach der Werkzeugeinsatz ohne Schwierigkeit seitlich vom zylindrischen Schenkel des Winkelhebels abgenommen werden kann. Dann kann der Werkzeugeinsatz ausgetauscht oder nachbearbeitet, in seiner Position gedreht oder durch einen anderen Werkzeugeinsatz ersetzt werden.

Die Erfindung läßt einen außerordentlich raschen Werkzeugwechsel zu, der keiner besonderen Fertigkeiten bedarf und damit zu einer Steigerung der Effizienz der entsprechenden Drahtbearbeitungsmaschine beiträgt.

Bei alledem ist bei der erfindungsgemäßen Drahtbearbeitungsmaschine die Ausbildung von Werkzeughalter, Formaufnahme und Werkzeugeinsatz nicht kompliziert ausgebildet, sondern durch nur wenige mechanische Elemente kann das gewünschte Ergebnis erzielt werden. Durch Anlage des Werkzeugeinsatzes gegen drei Abstützflächen am Werkzeughalter wird auch immer eine präzise Positionierung des Werkzeugeinsatzes gewährleistet.

Bei der Erfindung können die zueinander geneigten Abstützflächen unter jedem geeigneten Winkel zueinander verlaufen, wobei sie jedoch ganz bevorzugt unter einem Winkel von 90° zueinander angestellt sind. Auch die weitere, zu den beiden Abstützflächen angestellte dritte Abstützfläche kann in jeder geeigneten Anstellung zu den beiden anderen Abstützflächen ausgerichtet sein, wird jedoch ebenfalls ganz besonders bevorzugt jeweils zu ihnen unter einem Winkel von 90° angeordnet.

Die Anordnung der Gewindebohrung im Werkzeughalter kann ebenfalls in jeder passenden Ausrichtung in diesem erfolgen, verläuft jedoch ganz besonders bevorzugt in einer Richtung senkrecht im Vergleich zur weiteren, dritten Abstützfläche.

Außerdem ist es bei der Erfindung vorteilhaft, wenn die Oberseite des in der Aussparung liegenden Schenkels des L-förmigen Winkelhebels in dessen nicht-verkipptem Zustand parallel zur ihr zugewandten Anlagefläche des Werkzeugeinsatzes ausgerichtet ist.

Die Anordnung der Formaufnahme an der Vorderseite des Werkzeughalters kann in jeder geeigneten Position vorgesehen sein. Besonders bevorzugt wird jedoch jede der beiden zueinander geneigten Abstützflächen der Formaufnahme zu einer Längsmittelebene des Halters geneigt verlaufend ausgeführt, was insbesondere günstig ist, wenn mit einem rotierenden Schnittsystem gearbeitet wird.

Soll hingegen bei der erfindungsgemäßen Drahtbearbeitungsmaschine die Schneideinrichtung einen Geradschnitt durchführen, ist es vorteilhaft, wenn eine der beiden zueinander geneigten Abstützflächen der Formaufnahme parallel zu einer Längsmittelebene des Halters und die andere der beiden Anlageflächen senkrecht hierzu verläuft.

Vorteilhafterweise wird ferner bei der Erfindung im Bereich der Formaufnahme und in Richtung der Durchgangsbohrung des Werkzeugeinsatzes gesehen, die Dicke des Werkzeugeinsatzes der Dicke des Halters entsprechend ausgeführt. Dies bedeutet, daß am vorderen Endbereich des Werkzeughalters die Formaufnahme als nach einer Seite des Werkzeughalters offene Ausnehmung mit gleicher Dicke wie der dann dort noch neben der Formaufnahme verbleibende Restbereich des Werkzeughalters ausgeführt ist.

Die Erfindung bezeiht sich ferner auch auf ein Schneidwerkzeug zur Verwendung bei einer erfindungsgemäßen Drahtbearbeitungsmaschine gemäß den weiter oben dargestellten Ausführungsformen, wobei dieses Schneidwerkzeug einen Werkzeughalter mit einem an ihm befestigten Werkzeugeinsatz umfaßt, der in einer am Werkzeughalter an dessen in Schneidrichtung vorderem Ende ausgebildeten Formaufnahme aufgenommen und befestigt ist. Erfindungsgemäß umfaßt dabei die Formaufnahme zwei zueinander geneigte Abstützflächen sowie eine weitere Abstützfläche, die zu den beiden anderen angestellt ist, wobei im Werkzeughalter in einem Abstand von der Formaufnahme entfernt eine Gewindebohrung vorgesehen und eine in die weitere Abstützfläche mündende Aussparung angebracht ist, die ihn durchsetzt, dabei in ihrem vorderen Endbereich in einem Abstand von der weiteren Abstützfläche einen Absatz bildet und in Längsrichtung des Werkzeughalters bis zu der Gewindebohrung verläuft, und daß im Werkzeugeinsatz eine Durchgangsbohrung vorgesehen ist, in die der eine, zylindrische Schenkel eines L-förmigen Winkelhebels mit Spiel frei hineinragt, während der andere Schenkel des Winkelhebels in der Aussparung sitzt, mit seinem freien Endbereich in eine Axialnut einer in die Gewindebohrung eingeschraubten Schraube radial hineinragt und sich an seinem entgegengesetzten, vorderen Ende auf dem Absatz abstützt, wobei der zylindrische Schenkel des Winkelhebels in der Durchgangsbohrung durch Verdrehen der Schraube unter Abstützung gegen den Absatz verkippbar und damit der Werkzeugeinsatz gegen alle Abstützflächen verklemmbar sowie am Werkzeughalter fixierbar ist.

Bei dem erfindungsgemäßen Schneidwerkzeug ist der Werkzeugeinsatz sehr rasch und unkompliziert aus seiner Befestigung am Werkzeughalter freigebbar und abnehmbar, wobei das erfindungsgemäße Schneidwerkzeug einen einfachen und raschen Aufbau aufweist. Das Freisetzen und Abnehmen des Werkzeugeinsatzes bzw. dessen Auswechseln am Werkzeughalter bedarf auch keiner besonderen Geschicklichkeit.

Bevorzugte Ausgestaltungen des erfindungsgemäßen Schneidwerkzeuges entsprechen den in den Kennzeichen der Ansprüche 2 bis 7 bereits angegebenen Ausführungen der erfindungsgemäßen Drahtbearbeitungsmaschine.

Die Erfindung wird nachfolgend anhand der Zeichnungen im Prinzip beispielshalber noch näher erläutert. Es zeigen:
- Fig.1: eine perspektivische Darstellung eines erfindungsgemäßen Schneidwerkzeuges mit montiertem Werkzeugeinsatz für eine erfindungsgemäße Drahtbiegemaschine;
- Fig. 2: eine perspektivische Schnittdarstellung entsprechend Schnittlinie ***II-II*** gemäß Fig. 1;
- Fig. 3A und 3B: eine prinzipielle Darstellung des Schnittsystems einer Schenkelfedermaschine in Seitenansicht (Fig. 3A) und Vorderansicht (Fig. 3B) bei einer erfindungsgemäßen Drahtbearbeitungsmaschine;
- Fig.4: eine erfindungsgemäße Drahtbearbeitungsmaschine in Form einer Federwindemaschine mit rotierendem Schnittsystem, sowie
- Fig.5: eine erfindungsgemäße Drahtbearbeitungsmaschine in Form einer Federwindemaschine mit Geradschnitt.

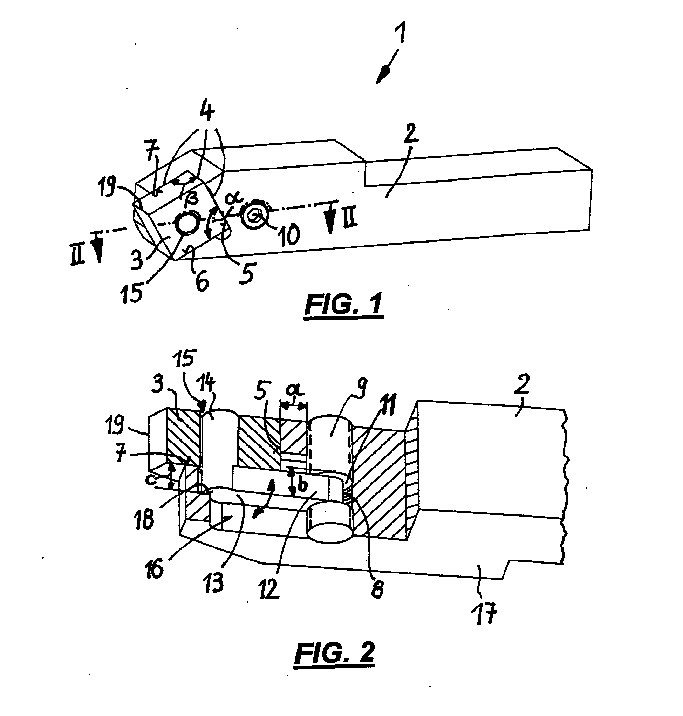

In Fig. 1 ist in einer perspektivischen Darstellung ein Schneidwerkzeug 1 einer Drahtbearbeitungsmaschine gezeigt, das einen Werkzeughalter 2 sowie einen Werkzeugeinsatz 3 umfaßt, der am vorderen Ende des Werkzeughalters 2 angebracht ist.

Der Werkzeugeinsatz 3 sitzt in einer Formaufnahme 4 am vorderen Ende des Werkzeughalters 2, die von dessen einer (in Fig. 1: der dem Betrachter zugekehrten) Seite aus seitlich in den Werkzeughalter 2 hinein bis etwa zur Hälfte dessen dortiger Dicke eingeformt ist, wie dies Fig. 1 im einzelnen darstellt, wobei auf die zeichnerische Darstellung insoweit ausdrücklich verwiesen wird.

Die Formaufnahme 4 umfaßt eine Abstützfläche 5 als hintere Begrenzungsfläche, ferner eine zweite Abstützfläche 6, die unter einem Winkel von **α = *90°*** zur Abstützfläche 5 geneigt verläuft und die untere Begrenzungsfläche der Formaufnahme 4 bildet.

Ebenfalls unter einem Winkel von β = 90° zur Abstützfläche 5 und gleichermaßen zur Abstützfläche 6 verlaufend weist die Formaufnahme 4 noch eine dritte Abstützfläche 7 auf, welche, in Blickrichtung des Betrachters in Fig. 1 gesehen, die etwa in der Mitte des Werkzeughalters 2 liegende Begrenzungsfläche der Formaufnahme 4 bildet.

Auch wenn der Winkel α im gezeigten Ausführungsbeispiel 90° beträgt, könnte die Neigung der beiden Abstützflächen 5 und 6 zueinander auch so gewählt werden, daß sie einen spitzen oder auch einen stumpfen Winkel zwischen sich einschließen.

Gleichermaßen kann auch die Anordnung der dritten, weiteren Abstützfläche 7 relativ zu den Abstützflächen 5 und 6 anders als unter 90° verlaufend gewählt werden, wobei es auch möglich ist, daß diese Abstützfläche 7 gegenüber beiden Abstützflächen 5 und 6 nicht unter einem gleichen Winkel, sondern unter unterschiedlichen Winkeln geneigt verlaufen könnte.

Es sein nunmehr Bezug genommen auf Fig. 2, die eine perspektivische Schnittdarstellung des Schnittes ***II-II*** aus Fig. 2 darstellt.

Wie Fig. 2 zeigt, ist im Werkzeughalter 2 in einem Abstand ***a*** von der Formaufnahme 4 (oder, genauer gesagt: in der Schnittebene ***II-II*** von der Abstützfläche 5 entfernt) eine Gewindebohrung 8 angebracht, in die eine Schraube 9 mit einem Innensechskant 10 eingeschraubt ist.

Die Schraube 9 weist in ihrem Verlauf eine Axialnut 11 über eine axiale Länge b auf, in die ein Längsschenkel 12 eines Winkelhebels 13 mit einem (aus Fig. 2 nicht ersichtlichen) axialen Spiel hineinragt.

Der Winkelhebel 13 ist an seinem der Schraube 9 abgewandten Endbereich mit einem unter 90° zum Längsschenkel 12 verlaufenden zylindrischen Schenkel 14 versehen, der seinerseits in eine senkrecht zur weiteren Abstützfläche 7 verlaufende, im Werkzeugeinsatz 3 angebrachte Durchgangsbohrung 15 mit Spiel hineinragt. Dabei ist die Länge des zylindrischen Schenkels 14 des Winkelhebels 13 so ermessen, daß sie die Durchgangsbohrung 15 im unverkippten Zustand des Winkelhebels 13 ganz durchläuft und die radiale Endfläche des zylindrischen Schenkels 14 etwa mit der dortigen Endfläche des Werkzeugeinsatzes 3 abschließt.

Wie die Fig. 1 und 2 zeigen, liegt der Werkzeugeinsatz 3 mit seinen den Abstützflächen 5, 6 und 7 der Formaufnahme 4 zugewandten Flächen an diesen Abstützflächen 5, 6 und 7 an.

In den Werkzeughalter 2 ist in dessen vorderem Bereich, wie Fig. 2 zeigt, eine Aussparung 16 eingebracht, die sowohl zur weiteren Abstützfläche 7 hin, wie auch, in Gegenrichtung, zu der dem Betrachter in Fig. 1 abgewandten Seitenfläche des Werkzeughalters 2 hin offen ist.

Die Aussparung 16 bildet in ihrem vorderen Bereich einen etwa halbkreisförmigen Absatz 18 aus, und zwar in einer Tiefe c von der weiteren Abstützfläche 7 entfernt, auf dem sich der Winkelhebel 13 in seinem dortigen vorderen Bereich unterhalb des zylindrischen Schenkels 14 gegenüber dem Werkzeughalter 2 abstützt.

In der Aussparung 16 ist weiterhin, wie Fig. 2 zeigt, auch der Längsschenkel 12 des Winkelhebels 13 aufgenommen, und zwar so, daß er innerhalb der Aussparung 16 unter Abstützung des Winkelhebels 13 am Absatz 18 des Werkzeughalters 2 in Richtung des Doppelpfeils in Fig. 2 etwas verschwenkt werden kann.

Dabei handelt es sich allerdings nur um einen relativ kleinen Verschwenkbereich, der gerade so groß oder etwas größer ist als die Verschwenkung, die erforderlich ist, damit der zylindrische Schenkel 14 des Winkelhebels 13 sich in der Durchgangsbohrung 15 unter Aufhebung seines dortigen Spieles gegenüber dem Werkzeugeinsatz 3 so weit verschwenken kann, daß er diesen gegen die Abstützflächen 5, 6 und 7 verklemmt.

Die Verkippung des Winkelhebels 13 erfolgt dabei über ein entsprechendes Verdrehen der Schraube 9 im Werkzeughalter 2. Der beim Verdrehen bewirkte axiale Versatz ihrer Axialnut 11 führt zu einem entsprechenden axialen Verschieben des dortigen Endes des Längsschenkels 2 des Winkelhebels 13 und damit zu dem gewünschten Kippeffekt des letzteren. Dabei kann das Verdrehen der Schraube 9 über den Innensechskant 10 von der Außenseite des Werkzeughalters 2 her ohne Schwierigkeit von einer Bedienungsperson vorgenommen werden. Wird andererseits die Verklemmung des Werkzeugeinsatzes 3 gegenüber den Abstützflächen 5, 6 und 7 der Formaufnahme 4 durch ein entsprechendes gegenläufiges Verdrehen der Schraube 9 aufgehoben, kann der Werkzeugeinsatz 3 von der Bedienungsperson vom zylindrischen Schenkel 14 abgezogen werden, sobald letzterer in der Durchgangsbohrung 15 wieder Spiel hat.

Wie Fig. 2 zeigt, verläuft die Aussparung 16, in Längsrichtung des Werkzeughalters 2, soweit, daß dort auch noch der ihr zugewandte Mantelbereich der Schraube 9 frei liegt und diese nur in ihrem hinteren Endbereich mit dem Gewinde der Gewindebohrung 8 noch in Eingriff steht.

Beim Zusammenbau des Schneidwerkzeugs 1 wird zunächst in den Werkzeughalter 2 die Schraube 9 eingedreht und dann in die Aussparung 16 des Werkzeughalters 2 der Winkelhebel 13 so eingesetzt, daß er in seinem vorderen Bereich unten auf dem Absatz 18 aufliegt und mit dem freien Endbereich seines Längsschenkels 12 in die Axialnut 11 der Schraube 9 hineinragt. Da zu diesem Zeitpunkt der Werkzeugeinsatz 3 noch nicht in die Formaufnahme 4 eingesetzt ist und die Aussparung 16, wie Fig. 2 zeigt, in die weitere Abstützfläche 7 mündet, kann von dorther der Winkelhebel 13 ohne Schwierigkeit in der geforderten Weise eingesetzt werden.

Anschließend kann sodann der Werkzeugeinsatz 3 auf den zylindrischen Schenkel 14 des Winkelhebels 13 aufgesetzt werden.

Beim Verdrehen der Schraube 9 wird der Winkelhebel 13 unter Abstützung auf dem Absatz 18 verkippt und spannt dabei den Werkzeugeinsatz 3 gegen die drei Anlageflächen 5, 6 und 7, wodurch er in der Formaufnahme 4 fest fixiert wird.

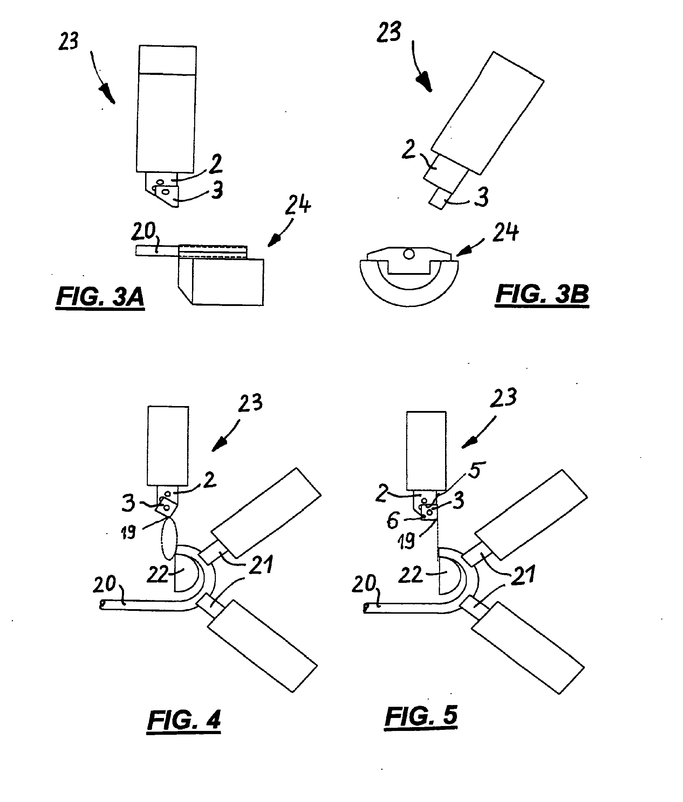

Bei dem in den Fig. 1 und 2 gezeigten Ausführungsbeispiel der Schneideinrichtung 1 sind die Abstützflächen 5 und 6 der Formaufnahme 4 gegenüber der Längsmittelebene des Werkzeughalters 2 jeweils unter einem Winkel geneigt angeordnet. Diese Anordnung führt dazu, daß die Schneidkante 19 des Werkzeugeinsatzes 3 nach vorne übersteht und alle anderen Abschnitte des Werkzeugeinsatzes 3, in Längsrichtung des Werkzeughalters 2 gesehen, hinter ihr liegen. Diese Ausgestaltung ist besonders günstig für den Fall, wenn bei der erfindungsgemäßen Drahtbearbeitungsmaschine ein rotierendes Schnittsystem eingesetzt wird, wie dieses ganz im Prinzip in Fig. 4 für eine Federwindemaschine dargestellt ist:

Von einer (nicht dargestellten) Drahtführung der Drahtbearbeitungsmaschine wird hier ein Draht 20 einer nachgeschalteten Drahtformstation in Form einer Drahtwindestation seitlich zugeführt, an der zur Bearbeitung des zugelieferten Drahtes 20 Drahtformwerkzeuge in Form von Windefingern 21 und eine Schneideinrichtung 23 zum Schneiden des Drahtes 20 vorgesehen sind. Die Schneideinrichtung umfaßt ein Schneidwerkzeug, entsprechend dem Schneidwerkzeug 1 aus den Fig. 1 und 2, mit einem Werkzeughalter 2, an dem vorne ein Schneideinsatz 3 befestigt ist. Die Schneide 19 des Werkzeugeinsatzes 3 führt bei dem hier dargestellten Schnittsystem bei der Schnittbewegung eine elliptische Bahnkurve (punktierte Darstellung) aus.

Der zugelieferte Draht 20 wird von den Windefingern 21 in eine Kreisbahn umgelenkt, die der Federwindung der gewünschten Feder entspricht. In das Innere dieser Federwindung ist ein Dorn 22 einbringbar, wobei die Schneideinrichtung 23 oberhalb des Dorns 22 abgebracht und der Werkzeugeinsatz 3 bzw. dessen Schneide 19 so ausgerichtet ist, daß der Draht 20 zwischen der Schneideinrichtung 23 und dem Dorn 22 abgeschert werden kann.

In Fig. 5 ist für eine gleiche Federwindemaschine die Anordnung der Schneideinrichtung 23 für den Fall eines gewünschten Geradschnittes gezeigt. Hier verläuft die Schnittbewegung des Werkzeugeinsatzes 3 bzw. dessen Schneide 19 geradlinig, wie in Fig. 5 ebenfalls punktiert dargestellt ist. In diesem Fall ist der Werkzeugeinsatz 3 in einer gegenüber den Ausführungsformen der Fig. 1 und 2 bzw. der Fig. 4 unterschiedlichen Relativlage zum Werkzeughalter 2 an diesem befestigt, und zwar derart, daß hier die Abstützfläche 5 der Formaufnahme 4 senkrecht und die Abstützfläche 6 parallel zur Längsachse des Werkzeughalters 2 verlaufen.

Schließlich sei noch Bezug genommen auf die Darstellungen der Fig. 3A und 3B, die ganz prinzipiell das Schnittsystem einer Schenkelfedermaschine in Seitenansicht (Fig. 3A) und in Vorderansicht (Fig. 3B) zeigen.

Dabei tritt der Draht 20 von hinten durch eine Drahtführung 24 in die nachgeschaltete Drahtformstation, in der rund um die Drahtführung 24 herum radial verschiedene Werkzeuge zum Bearbeiten des Drahtes 20 angeordnet sind. In den Fig. 3A und 3B ist nur ein Werkzeug, nämlich die Schneideinheit 23, gezeigt.

Die Schneideinrichtung 23 verfährt radial gegenüber dem Draht 20 und schert dabei diesen zwischen dem Werkzeugeinsatz 3 und der Drahtführung 24 ab. Dabei können die Drahtführung 24 und der Draht 20 um die Drahtlängsachse verdreht werden.

## Patentansprüche

1. Drahtbearbeitungsmaschine mit einem Drahteinzug, einer Drahtführung (24) sowie einer dieser in Drahtförderrichtung nachgeschalteten Drahtformstation, an der Drahtformwerkzeuge (21) zur Bearbeitung des zugelieferten Drahtes (20) und Schneideinrichtungen (23) zum Schneiden desselben vorgesehen sind, wobei jeder Schneideinrichtung (23) ein Schneidwerkzeug (1) zugeordnet ist, das einen Werkzeughalter (2) mit einem an diesem befestigten Werkzeugeinsatz (3) umfaßt, der in einer am Werkzeughalter (2) an dessen in Schneidrichtung vorderem Ende ausgebildeten Formaufnahme (4) aufgenommen und befestigt ist, ***dadurch gekennzeichnet, daß*** die Formaufnahme (4) zwei zueinander geneigte Abstützflächen (5, 6) sowie eine weitere Abstützfläche (7), die zu den beiden anderen angestellt ist, umfaßt, im Werkzeughalter (2) in einem Abstand (a) von der Formaufnahme (4) entfernt eine Gewindebohrung (8) vorgesehen ist, daß ferner eine in die weitere Abstützfläche (7) mündende Aussparung (16) im Werkzeughalter (2) angebracht ist, die ihn durchsetzt, dabei in ihrem vorderen Endbereich in einem Abstand (c) von der weiteren Abstützfläche (7) einen Absatz (18) bildet und in Längsrichtung des Werkzeughalters (2) bis zu der Gewindebohrung (8) verläuft, und daß im Werkzeugeinsatz (3) eine Durchgangsbohrung (15) vorgesehen ist, in die der eine, zylindrische Schenkel (14) eines L-förmigen Winkelhebels (13) mit Spiel frei hineinragt, während der andere Schenkel (12) des Winkelhebels (13) in der Aussparung (16) sitzt, mit seinem freien Endbereich in eine Axialnut (11) einer in die Gewindebohrung (8) eingeschraubten Schraube (9) radial hineinragt und sich an seinem entgegengesetzten, vorderen Ende auf dem Absatz (18) abstützt, wobei der zylindrische Schenkel (14) des Winkelhebels (13) in der Durchgangsbohrung (15) durch Verdrehen der Schraube (9) unter Abstützung gegen den Absatz (18) verkippbar und damit der Werkzeugeinsatz (3) gegen alle Abstützflächen (5, 6, 7) verklemmbar sowie am Werkzeughalter (2) fixierbar ist.

2. Drahtbearbeitungsmaschine nach Anspruch 1, **dadurch gekennzeichnet, daß** die zueinander geneigten Abstützflächen (5, 6) unter einem Winkel (α) von 90° zueinander verlaufen und/oder die weitere Abstützfläche (7) zu ihnen jeweils unter 90° angestellt ist.

3. Drahtbearbeitungsmaschine nach Anspruch 1 oder 2, **dadurch gekennzeichnet, daß** die Gewindebohrung (8) im Werkzeughalter (2) in einer Richtung senkrecht im Vergleich zur weiteren Abstützfläche (7) verläuft.

4. Drahtbearbeitungsmaschine nach einem der Ansprüche 1 bis 3, **dadurch gekennzeichnet, daß** die Oberseite des in der Aussparung (16) liegenden Schenkels (12) des L-förmigen Winkelhebels (13) in dessen nicht-verkipptem Zustand parallel zur ihr zugewandten Anlagefläche des Werkzeugeinsatzes (3) ausgerichtet ist.

5. Drahtbearbeitungsmaschine nach einem der Ansprüche 1 bis 4, **dadurch gekennzeichnet, daß** jede der beiden zueinander geneigten Abstützflächen (5, 6) der Formaufnahme (4) zu einer Längsmittelebene des Werkzeughalters (3) geneigt verläuft.

6. Drahtbearbeitungsmaschine nach einem der Ansprüche 1 bis 4, **dadurch gekennzeichnet, daß** eine der beiden zueinander geneigten Abstützflächen (5, 6) der Formaufnahme (4) parallel zu einer Längsmittelebene des Werkzeughalters (3) und die andere der beiden Anlageflächen (5, 6) senkrecht hierzu verläuft.

7. Drahtbearbeitungsmaschine nach einem der Ansprüche 1 bis 6, **dadurch gekennzeichnet, daß** im Bereich der Formaufnahme (4) und in Richtung der Durchgangsbohrung (15) des Werkzeugeinsatzes (3) gesehen die Dicke des Werkzeugeinsatzes (3) der Dicke des Werkzeughalters (3) entspricht.

8. Schneidwerkzeug (1) für eine Drahtbearbeitungsmaschine nach einem der vorhergehenden Ansprüche, das einen Werkzeughalter (2) mit einem an diesem befestigten Werkzeugeinsatz (3) umfaßt, der in einer am Werkzeughalter (2) an dessen in Schneidrichtung vorderem Ende ausgebildeten Formaufnahme (4) aufgenommen und befestigt ist, ***dadurch gekennzeichnet, daß*** die Formaufnahme (4) zwei zueinander geneigte Abstützflächen (5, 6) sowie eine weitere Abstützfläche (7) umfaßt, die zu den beiden anderen angestellt ist, wobei im Werkzeughalter (2) in einem Abstand (a) von der Formaufnahme (4) entfernt eine Gewindebohrung (8) vorgesehen und ferner eine in die weitere Abstützfläche (7) mündende Aussparung (16) angebracht ist, die ihn durchsetzt, dabei in ihrem vorderen Endbereich in einem Abstand (c) von der weiteren Abstützfläche (7) einen Absatz (18) bildet und in Längsrichtung des Werkzeughalters (2) bis zu der Gewindebohrung (8) verläuft, und daß im Werkzeugeinsatz (3) eine Durchgangsbohrung (15) vorgesehen ist, in die der eine, zylindrische Schenkel (14) eines L-förmigen Winkelhebels (13) mit Spiel frei hineinragt, während der andere Schenkel (12) des Winkelhebels (13) in der Aussparung (16) sitzt, mit seinem freien Endbereich in eine Axialnut (11) einer in die Gewindebohrung (8) eingeschraubten Schraube (9) radial hineinragt und sich an seinem entgegengesetzten, vorderen Ende auf dem Absatz (18) abstütz, wobei der zylindrische Schenkel (14) des Winkelhebels (13) in der Durchgangsbohrung (15) durch Verdrehen der Schraube (9) unter Abstützung gegen den Absatz (18) verkippbar und damit der Werkzeugeinsatz (3) gegen alle Abstützflächen (5, 6, 7) verklemmbar sowie am Werkzeughalter (2) fixierbar ist.
